# EUROPÄISCHE PATENTSCHRIFT

(11) **EP 1 411 467 B1**
(45) Veröffentlichungstag und Bekanntmachung des Hinweises auf die Patenterteilung: **15.10.2008**
(21) Anmeldenummer: 03023565.9
(22) Anmeldetag: 16.10.2003
(51) Int. Cl.: G06K 19/077, G06K 19/07

(54) **Tragbarer Datenträger mit Display**
Portable data carrier with display
Support de données portable avec affichage

(30) Priorität: 17.10.2002 DE 10248391
(43) Veröffentlichungstag der Anmeldung: 21.04.2004
(73) Patentinhaber: Giesecke & Devrient GmbH, 81677 München (DE)
(72) Erfinder: Hoppe, Joachim, 81377 München (DE)
(74) Vertreter: Klunker . Schmitt-Nilson . Hirsch

(56) Entgegenhaltungen:
- EP-A- 0 913 268
- EP-A- 1 152 368
- WO-A-03/017195
- US-A- 4 797 542
- US-A- 6 019 284
- US-B1- 6 293 470

## Beschreibung

Die vorliegende Erfindung betrifft einen tragbaren Datenträger, insbesondere in Gestalt einer Chipkarte, mit einem Display, ein kombiniertes Chip- und Displaymodul für einen solchen Datenträger sowie Verfahren zu deren Herstellung.

Chipkarten mit Display werden als Ausweiskarten, Kreditkarten, Telefonkarten, Fahrkarten oder sogenannte "elektronische Geldbörsen" für den bargeldlosen Zahlungsverkehr eingesetzt.

Die in die Karten eingesetzten Displayelemente sind hohen dynamischen Belastungen in Form von Zug-, Druck- und Biegekräften ausgesetzt. In der US 6,293,470 B1 wird ein den ISO-Normen gerecht werdender Kartenaufbau mit integriertem Display vorgeschlagen, bei dem die einzelnen Funktionsschichten des Displays nacheinander während der Kartenherstellung aufeinander aufgebaut werden. Dies ist jedoch sehr aufwendig und für die Massenfertigung eher ungeeignet.

Bevorzugt wird stattdessen der Einbau eines separat handhabbaren Displaymoduls in die Chipkarte, vorzugsweise ein Standarddisplaymodul. Ein Nachteil von erhältlichen Standarddisplaymodulen liegt allerdings darin, daß diese aus Glassubstraten aufgebaut sind, welche gegenüber den vorgenannten Belastungen entsprechend empfindlich sind. Aber auch bei Verwendung moderner flexibler Substratmaterialien zur Herstellung des Displays ist die Integration des Kartenchips und des Displays in den Kartenkörper noch mit einem nicht unerheblichen Fertigungsaufwand verbunden.

US 6,019,284 A *offenbart eine kontaktbehaftete oder kontaktlose Chipkarte mit einem flexiblen Kartenkörper und einem Display. Um der Karte insgesamt Flexibilität zu verleihen, soll das Display außerhalb der Hauptbelastungslinien der Karte angeordnet werden. Displaymodul und Chipmodul sind als separate Bauelemente aufgeführt, die in einer gemeinsamen Kavität plaziert werden. Die elektrische Verbindung zwischen beiden erfolgt über eine aus dem Displaymodul hervorstehende Auflageschulter unter dem Kontaktfeld des Chipmoduls. Das Verfahren erleichtert die Verbindung von Chipmodulen und Displaymodul, ist aber vergleichsweise aufwendig, da die Module einzeln handzuhaben sind und besondere Maßnahmen zur Schaffung einer glatten Kartenoberfläche vorzunehmen sind.*

EP 1 152 368 A1 *offenbart ein Verfahren zur Herstellung eines tragbaren Datenträgers das in Gestalt einer Chipkarte, die neben einem Chipmodul ein Display aufweist. Um den Ausschuß bei der Produktion gering zu halten, sollen die einzelnen Komponenten zu einer Systemkomponente zusammengefaßt werden, die unabhängig von der Kartenkörperfertigung auf Funktionsfähigkeit getestet werden kann. Die Systemkomponente besteht aus einer Grundplatte, aus der die einzelnen Komponenten nebeneinander plaziert sind. Dem Vorteil der vereinfachten Testbarkeit steht bei dieser Lösung gegenüber, daß für den Einbau in einen Kartenkörper besondere Maßnahmen zu treffen sind, um eventuelle Höhenunterschiede zwischen den Komponenten auszugleichen.*

*Aus der nur gemäß Artikel 54 (3) EPÜ relevanten* WO 03/017195 A1 *ist ein kombiniertes Chip- und Displaymodul entnehmbar, das erhalten wird, indem ein übliches Chipmodul und ein übliches Display auf einem gemeinsamen Substrat angeordnet und elektrisch leitend verbunden werden.*

Aufgabe der vorliegenden Erfindung ist es, eine einfach herstellbare, gegen Biegebelastungen unempfindliche Chipkarte mit Display vorzuschlagen.

Diese Aufgabe wird gelöst durch eine Anordnung mit den Merkmalen des Hauptanspruchs. Die Aufgabe wird auch gelöst durch ein Verfahren zur Herstellung eines für eine solche Anordnung geeigneten kombinierten Display- und Chipmoduls sowie durch ein Verfahren zur Herstellung einer Anordnung mit einem solchen Display- und Chipmodul gemäß den Merkmalen der nebengeordneten Ansprüche. In davon abhängigen Ansprüchen sind vorteilhafte Weiterbildungen und Ausgestaltungen der Erfindung angegeben.

Erfindungsgemäß ist das für das kombinierte Display- und Chipmodul verwendete Vergußmaterial elastischer ist als das Material des tragbaren Datenträgers. Vorzugsweise wird das kombinierte Display- und Chipmodul in eine Kavität des Kartenkörpers eingesetzt,dieaußerhalb der Hauptbiegezone des Kartenkörpers plaziertist. Die Hauptbiegezone der Karte erstreckt sich beidseitig entlang der Hauptbiegelinie, welche mittig zwischen den Schmalseiten des Kartenkörpers verläuft. Daher ist die Kavität entfernt von dieser Hauptbiegelinie angeordnet. Sie erstreckt sich vorzugsweise parallel zur Hauptbiegelinie mit einem größeren Abstand zur Hauptbiegelinie als zur Schmalseite des Kartenkörpers.

Durch die vorgenannten Maßnahmen wird zweierlei erreicht. Einerseits liegt das biegeempfindliche Display in einer biegespannungsarmen Zone der Karte. Andererseits schafft die gemeinsame Kavität für den Kartenchip und das Display komprimierte Einbauverhältnisse im Kartenkörper. Insbesondere verringert sich dadurch der Herstellungsaufwand, denn es muß lediglich eine Kavität für beide Elemente geschaffen werden. Auch der Kontaktierungsaufwand reduziert sich, da der Kartenchip und das Display unmittelbar miteinander kontaktiert werden können.

Erfindungsgemäß werden das Display und der Kartenchip zunächst in einem gemeinsamen Gehäuse vergossen und anschließend als kombiniertes Chip- und Displaymodul, welches nachfolgend auch als "Kombimodul" bezeichnet wird, in die Kartenkavität eingesetzt, beispielsweise eingeklebt. Dadurch läßt sich der Herstellungsaufwand wesentlich rationalisieren. Denn die verfahrenstechnisch komplizierte Kontaktierung des Chipmoduls mit dem Display kann aus dem KartenherstellungsProzeß heraus in einen separaten Prozeß vorverlagert werden. Die Handhabung des Kombimoduls als Halbzeug und dessen Einsetzen in den Kartenkörper während der Kartenherstellung ist demgegenüber unproblematisch. Das Kombimodul kann beispielsweise von Drittherstellern als Zulieferteil hergestellt und geliefert werden.

Das gemeinsame Modulgehäuse bietet den beiden Elementen, insbesondere dem empfindlichen und ansonsten ungeschützten Display einen zusätzlichen Schutz gegen äußere Belastungen, insbesondere Biegebelastungen. Aus diesem Grunde sollte auch das Vergußgehäuse des Kombimoduls vorzugsweise aus einem im Vergleich zum Kartenkörper elastischeren Material bestehen.

Da sich die Chipmodultechnologie und die Displaytechnologie grundsätzlich voneinander unterscheiden, werden diese Bauelemente üblicherweise in unterschiedlichen Herstellungsstätten produziert. Es ist daher vorteilhaft, wenn für die Zwecke der vorliegenden Erfindung Standarddisplays und Standard-Chipmodule verwendet werden. Insbesondere können ein Standard-Chipmodul und ein Display in einem Kombimodul integriert sein.

Gemäß einer Ausführungsform der Erfindung ist vorgesehen, ein Standard-chipmodul derart abzuwandeln, daß die Leiterbahnfolie des Chipmoduls sich weit über den Chip-Verguß hinaus bis über die Anzeigefläche des Displays erstreckt und Fensterbereiche besitzt, durch die hindurch die Anzeigefläche des Displays sichtbar ist. Die sich über die Anzeigefläche erstreckende Leiterbahnfolie schützt das Display gegen externe Druckbelastungen. Die Fensterbereiche können entweder aus der Leiterbahnfolie ausgestanzt sein oder sind, sofern es sich um Leiterbahnfolie handelt, vorzugsweise als transparente Bereiche der Leiterbahnfolie ausgeführt.

In diesem Falle ist es möglich, die Leiterbahnfolie des Chipmoduls als gemeinsame Leiterbahnfolie auch für das Display zu verwenden, indem die Ansteuerleitungen zum Ansteuern der einzelnen aktiven Displayanzeigebereiche auf der Leiterbahnfolie verlaufen. Sie müssen dann lediglich nach dem Aufsetzen des Displays auf die Leiterbahnfolie mit den Displaykontaktanschlüssen kontaktiert werden. Die Ansteuerelektronik kann dann ohne weiteres im Chip des Chipmoduls integriert sein. Es kann aber auch ein separater, ebenfalls auf der Leiterbahnfolie plazierter zweiter Chip als Ansteuerchip für das Display vorgesehen werden.

Gemäß einer besonderen Ausgestaltung der Erfindung ist auf der Rückseite des Kombimoduls eine Flachbatterie zur Stromversorgung des Displays vorgesehen. Zu diesem Zweck ist die Rückseite des Kombimoduls vorzugsweise mit einer Haftschicht versehen, an der die Flachbatterie anhaftet, von der sie jedoch ohne wesentlichen Kraftaufwand manuell lösbar ist. Mittels eines Steckkontaktes ist das Kontaktieren, Fixieren und Ein- und Auswechseln der Batterie von der dem Kombimodul gegenüberliegenden Seite der Chipkarte in einfacher Weise möglich.

Nachfolgend wird die Erfindung beispielhaft anhand der begleitenden Zeichnungen beschrieben. Darin zeigen:
Figur 1 einen Teil einer Chipkarte in Draufsicht;
Figur 2 eine Chipkarte im Biegelastfall in Draufsicht und in Seitenansicht;
Figur 3 ein Display und ein Chipmodul separiert;
Figur 4 ein Display und ein Chipmodul in Kombination;
Figur 5 ein Display mit separatem Chipmodul mit Terminalkontaktflächen;
Figur 6 ein Display und ein Chipmodul in Kombination;
Figur 7 ein Chipmodul im Querschnitt;
Figur 8 ein Display mit integriertem Ansteuerchip;
*Figur 9* *den Schichtaufbau eines Displays,*
*Figur 10* *ein Kombimodul mit in einem Gußgehäuse vergossenem Chipmodul und Display gemäß einer ersten Ausführungsform;*
*Figur 11* *das Einsetzen eines Kombimoduls in einen Kartenkörper im Querschnitt;*
*Figur 12* *einen Teil einer Chipkarte, bei dem das Chipmodul und das Display* bzw. Kombimodul *in der Chipkartenkavität von einem Vergußrahmen umgeben sind;*
Figur 13 ein Kombimodul mit in einem Gußgehäuse vergossenem Chipmodul und Display gemäß einer zweiten Ausführungsform; und
Figur 14 eine Chipkarte teilweise im Schnitt mit integriertem Kombimodul und auswechselbarer Flachbatterie.

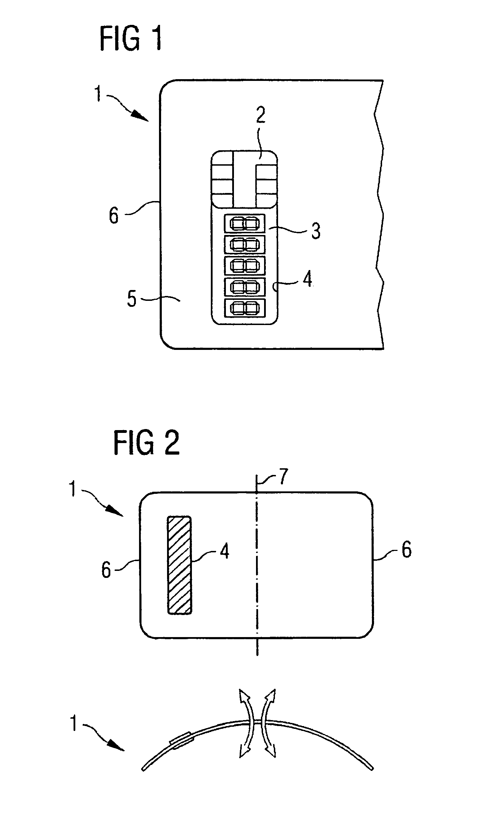

Figur 1 zeigt ein Ausführungsbeispiel einer Chipkarte 1, bei der ein Chipmodul 2 und ein Display 3 in einer Kavität 4 eines Kartenkörpers 5 gemeinsam aufgenommen sind. Die Kavität erstreckt sich parallel zu einer Schmalseite 6 des Kartenkörpers 5 in einem geringfügigen Abstand zur Schmalseite. Das Chipmodul 2 und das Display 3 sind so zueinander angeordnet, daß die entsprechende Kavität 4, in die sie eingesetzt werden, lang und schmal ist. Dadurch ist eine Positionierung dieser Bauelemente in größtmöglicher Entfernung zur Hauptbiegelinie des Kartenkörpers erreichbar.

In Figur 2 ist ein typischer Biegelastfall am Kartenkörper schematisch dargestellt. Die Hauptbiegelinie 7 verläuft mittig zwischen den gegenüberliegenden Schmalseiten 6 der Chipkarte 1. Die Kavität 4 besitzt dabei einen wesentlich größeren Abstand zur Hauptbiegelinie 7 als zur nächstliegenden Schmalseite 6 des Kartenkörpers, so daß sich Chipmodul und Display außerhalb der Hauptbiegezone befinden.

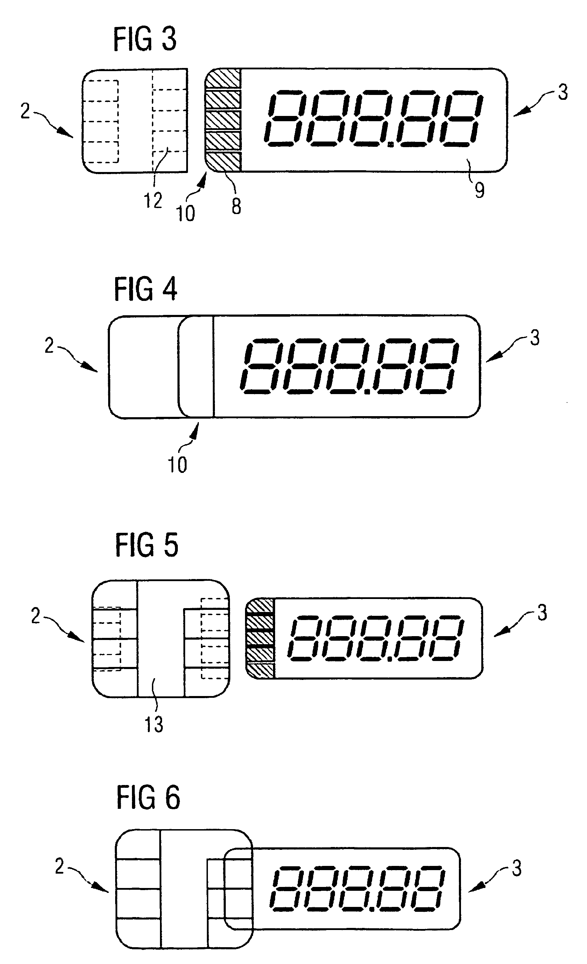

Figur 3 zeigt beispielhaft ein Standarddisplay 3, das in herkömmlicher Weise auf einem Basissubstrat 8 aufgebaut und mit einem Abdecksubstrat 9 abgedeckt ist. Bei den Basis- und Abdecksubstraten 8, 9 handelt es sich beispielsweise um Glassubstrate, zwischen denen sich eine die eigentliche Anzeigefläche bildende, aktive Displayschicht aus Polymermaterial befindet. Das Basissubstrat 8 ragt randseitig unter dem Abdecksubstrat 9 hervor und definiert eine Auflageschulter 10 zur Auflage eines Chipmoduls 2, welches in Figur 3 als separates Bauteil gezeigt ist. Auf der Auflageschulter 10 enden in einer nicht näher dargestellten Anzahl von ersten Kontaktflächen 11 eine entsprechende Anzahl von nicht dargestellten Leiterbahnen von und zu den einzelnen Elementen des Displays 3. Das Chipmodul 2 besitzt seinerseits Gegenkontaktflächen 12, die beim Zusammenfügen des Chipmoduls 2 mit dem Display 3 über den Kontaktflächen 11 des Displays 3 zu liegen kommen.

In Figur 4 sind das Display 3 und das Chipmodul 2 in zusammengefügter Anordnung entsprechend der Anordnung in einer Chipkarte dargestellt. Man erkennt, daß das Chipmodul 2 auf der Auflageschulter 10 des Displays 3 aufliegt und die Oberflächen des Chipmoduls 2 und des Displays 3 unmittelbar aneinandergrenzen, so daß die Kontaktflächen 8 und Gegenkontaktflächen 9 von der Kartenvorderseite aus betrachtet nicht sichtbar sind. Vielmehr ergänzen sich das Display 3 und das Chipmodul 2 optisch zu einer Einheit.

In den Figuren 5 und 6 ist eine Ausführungsvariante dargestellt, bei der die Oberfläche des Chipmoduls 2 als strukturiertes elektronisches Kontaktpad 13 zur berührenden Kontaktierung durch ein externes Chipkartenterminal ausgebildet ist. Um eine zuverlässige Kontaktierung zu gewährleisten, ist die Oberfläche des Chipmoduls 2 vergrößert ausgeführt. Figur 6 zeigt das Chipmodul 2 in Kombination mit dem Display 3 entsprechend der Darstellung gemäß Figur 4.

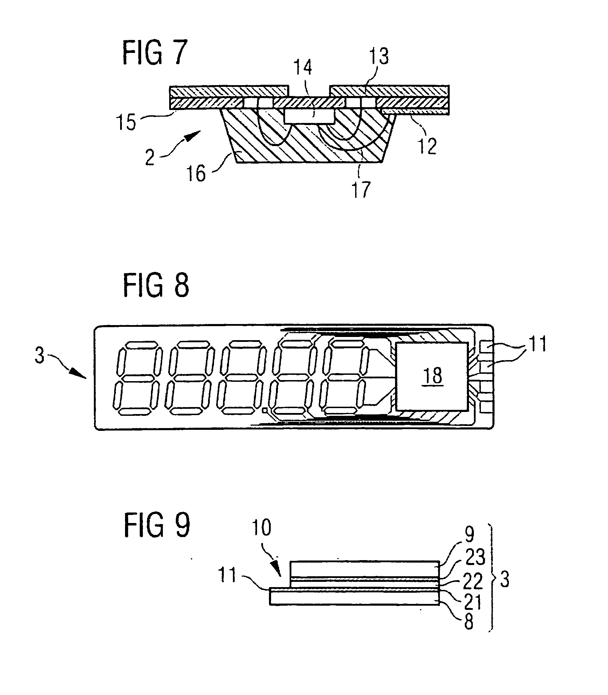

Figur 7 zeigt das Chipmodul 2 aus Figur 5 im Querschnitt. Es besitzt die für jedes Chipmodul typischen Komponenten, nämlich einen Chip 14, der auf einer Leiterbahnfolie 15 in einer Vergußmasse 16 vergossen ist und elektronische Bauelemente für den kontaktlosen und/oder kontaktbehafteten Daten- und/oder Energietransfer mit einem externen Terminal. In dem in Figur 7 dargestellten Standard-Chipmodul ist der Chip 14 über durch die Leiterbahnfolie 15 hindurchführende Bonddrähte 17 mit Kontaktzonen eines auf der gegenüberliegenden Oberfläche der Leiterbahnfolie 15 liegenden Kontaktpads 13 elektrisch leitend verbunden. Auf der chipseitigen Oberfläche der Leiterbahnfolie 15 befinden sich Gegenkontaktflächen 12 zur Kontaktierung des Displays 3, welche ebenfalls über Bonddrähte 17 mit dem Chip 14 elektrisch verbunden sind. Art und Ort der Kontaktflächen und Leiterbahnanordnungen sowie die Art und Weise der Datenübertragung - berührend oder berührungslos - können von Standard-Chipmodul zu Standard-Chipmodul je nach Verwendungszweck variieren.

Die Ansteuerelektronik zur Ansteuerung der einzelnen Displayanzeigebereiche kann im Chipmodul 2 integriert sein. Alternativ kann auch ein separater Steuerchip vorgesehen sein. Beispielsweise kann das Chipmodul 2 gemäß Figur 3 lediglich den Steuerchip mit der Ansteuerelektronik für das Display enthalten. Zusätzlich kann ein CPU-Chipmodul mit dem Ansteuerchipmodul verbunden werden, so daß in der Kavität insgesamt zwei Chipmodule und das Displaymodul vorzugsweise in Reihe angeordnet sind.

Weiterhin ist es möglich, die Ansteuerelektronik unmittelbar in das Display zu integrieren, so daß nur noch eine Kontaktierung mit dem CPU-Chipmodul notwendig ist. Ein derartiges Display 3 mit integrierter Ansteuerelektronik ist in Figur 8 dargestellt. Dort ist ein Ansteuerchip 18 in Flip-Chip-Bondtechnologie an Leiterbahnen angeschlossen ist, die zu den einzelnen anzusteuernden Displayanzeigebereichen sowie zu den Kontaktflächen 11 zur Kontaktierung des CPU-Chipmoduls führen. Die Integration des Ansteuerchips 18 in das Display 3 bietet den Vorteil, daß die relativ filigrane und deshalb aufwendige Kontaktierung der zahlreichen Displayansteuerleitungsbahnen aus dem Kartenfertigungsprozeß heraus in den Displayfertigungsprozeß vorverlagert werden kann. Die Kontaktierung des Displays 3 über die Kontaktflächen 11 zu den vergleichsweise großflächigen Gegenkontaktflächen des anzuschließenden Chipmoduls ist demgegenüber unkompliziert. Das Chipmodul liefert über die Kontaktflächen 11 serielle Signale an die Ansteuerelektronik im Ansteuerchip 18, welche die Ansteuerelektronik in parallele Signale zur individuellen Ansteuerung der jeweils zu aktivierenden Anzeigeflächenbereiche des Displays 3 umwandelt.

Unter Bezugnahme auf die Figuren 9 bis 11 wird im folgenden die Herstellung einer Chipkarte mit Display 3 und Chipmodul 2 erläutert. Zunächst wird ein Kartenkörper 5 mit einer Aussparung 4 zur Verfügung gestellt. Die Aussparung 4 kann beispielsweise in den Kartenkörper 5 eingefräst werden. Alternativ kann der Kartenkörper 5 im Spritzgießverfahren mit integrierter Aussparung 4 erzeugt werden. Der Kartenkörper kann einlagig oder mehrlagig ausgeführt sein. Im dargestellten Ausführungsbeispiel ist in den Kartenkörper 5 ein Leiterbahninlett 19 integriert, welches dazu dient, das nachfolgend einzusetzende Chip- und Displaymodul an weitere elektronische Bauteile, beispielsweise Schalter, Batterie, Tastatur, etc., innerhalb der Karte anzuschließen. Dazu werden Kontaktflächen 20 des Leiterbahninletts 19 freigelegt bzw. im Falle der Spritzgußherstellung freigehalten, die auf einer Auflageschulter im Kartenkörper 5 enden.

*In die Aussparung 4 wird ein kombiniertes Chip- und Displaymodul 27 implantiert. Dazu können gängige Klebetechniken zum Einsatz kommen.*

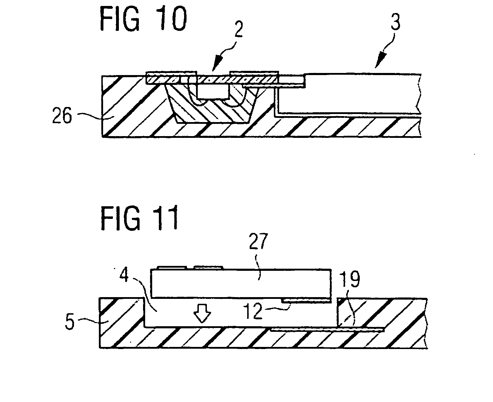

*Fig. 10* *zeigt ein Ausführungsbeispiel eines kombinierten Chip- und Displaymoduls 27 mit einem Display 3 und einem Chipmodul, die in einem Gehäuse zu einer Einheit vergossen sind.*

*Chipmodul 2 und Display 3 werden in das Gußgehäuse eingebettet, bevor sie in die Kavität 4 des Kartenkörpers 5 eingesetzt werden. Sie bilden ein einheitliches Kombimodul, welches als solches in eine entsprechend vorbereitete Kartenkavität eingebettet, beispielsweise eingeklebt wird, wie in* *Fig. 11* *gezeigt. Dort wird das Kombi-modul von oben in die Kavität des Kartenkörpers 5* eingesetzt. *An der Unterseite des Kombimoduls 2 7 sind Kontaktflächen 12 vorgesehen, um das Kombimodul 27 an ein in den Kartenkörper 5 integriertes Leiterbahninlett 19 anzuschließen*.

*Zur Herstellung des kombinierten Chip- und Displaymoduls 27 wird zunächst ein Display, vorzugsweise als vorgefertigtes Bauteil zur Verfügung gestellt*. *Es umfaßt, wie in* *Fig. 9* *angedeutet, ein Basissubstrat 8, eine untere Elektrode 21 auf dem Basissubstrat 8,* beispielsweise als *Indiumzinnoxyd (ITO-Schicht), eine Displayfunktionsschicht* 22, *eine* obere Elektrode 23, ebenfalls als ITO-Schicht, und darüber das *Abdecksubstrat 9. Das Display 3 besitzt eine Auflageschulter 10 mit Kontaktflächen 11 zur Auflage und Kontaktierung des Chipmoduls.*

*Das Chipmodul ist ein Modul- Interface-CTO-Chipmodul, beispielsweise mit integrierter Ansteuerelektronik. D.h. das Chipmodul 2 besitzt 2 Schnittstellen, nämlich einerseits die Kontaktzonen des Kontaktpads* 13 *auf der zur Kontaktoberfläche weisenden Chipmodulseite für den kontaktbehafteten Daten- und Energietransfer sowie erste und* zweite *(Gegen-) Kontaktflächen* 12 *auf der Chipmodulunterseite zur Kontaktierung des Chipmoduls mit den Kontaktflächen 11 des Displays 3 einerseits und den* Kontaktflächen 20 des Leiterbahninletts 19 andererseits. Der CPU-Chip mit der *integrierten Ansteuerelektronik ist in einer Vergußmasse vergossen.*

*Das Chipmodul besitzt seinerseits Auflageschultern, in denen die ersten und zweiten Gegenkontaktflächen 12 liegen. Es wird an das Display 3 so angesetzt, daß die* ersten *und* zweiten Gegenkontaktflächen 12 auf den Kontaktflächen 11 des Displays 3 und *den* Kontaktflächen 20 des Leiterbahninletts 19 aufliegen.

*Die elektrische Kontaktierung der übereinanderliegenden Kontaktflächen 11, 12, bzw. 20, 12 wird durch einen anisotrop leitfähigen Kleber 24 oder isotrop leitende Kleber oder Pasten bewirkt.*

*In Fällen, in denen eine Kontaktierung des kombinierten Chip- und Displaymoduls 27 zur weiteren elektronischen Bauelementen der Chipkarte nicht erforderlich ist, entfällt das Leiterbahninlett 19 und dementsprechend auch eine Kontaktierung des Chip- und Displaymoduls über den Kleber 24 an die Kontaktflächen 20.*

*Eine zusätzliche Kartendeckschicht ist nicht erforderlich, kann aber bedarfsweise vorgesehen werden. Gegebenenfalls kann das Chipmodul 2 auch über die Oberfläche des Displays 3 hinausragen und erst nach Applikation einer zusätzlichen Kartendeckschicht bündig mit der Kartenoberfläche abschließen.*

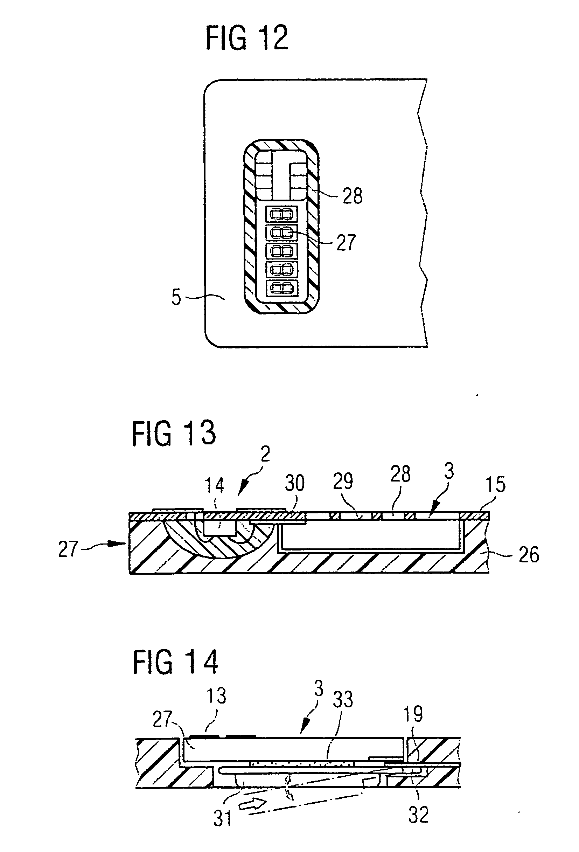

Das Kombimodul 27 kann in die Kavität 4 eingeklebt sein. Es kann aber auch, wie in Figur 12 gezeigt, zur Fixierung im Kartenkörper 5 mit einem geeigneten, vorzugsweise elastischen Material rundherum vergossen werden. Durch einen solchen Vergußrahmen 28 wird erreicht, daß Biegespannungen im Kartenkörper 5 nicht oder zumindest in reduziertem Maße auf die Bauelemente des Kombimoduls 27 übertragen werden. Selbstverständlich kann ein solcher Vergußrahmen 28 auch im Zusammenhang mit dem erstgenannten Ausführungsbeispiel vorgesehen werden, wonach das Chipmodul 2 und das Display 3 zunächst als selbständige, miteinander kontaktierte Bauelemente in die Kavität des Kartenkörpers eingesetzt sind.

Figur 13 zeigt eine abgewandelte Ausführungsform des Kombimoduls 27. In diesem Falle wird kein Standardchipmodul verwendet. Stattdessen wird für das Chipmodul und das Display eine gemeinsame Leiterbahnfolie 15 eingesetzt. Im Bereich des Chips 14 weist die gemeinsame Leiterbahnfolie das übliche Kontaktpad 13 auf der Oberseite der Leiterbahnfolie 15 auf, und im Bereich des Displays 3 weist es Fenster 28 auf, durch die hindurch die Displayoberfläche 29 zumindest ausschnittweise sichtbar ist. Die die Anzeigefläche 29 des Displays 3 überdeckende Leiterbahnfolie 15 schützt das Display vor Druckbelastungen. Die Leiterbahnfolie 15 kann beispielsweise aus einem Glasepoxy- oder Polyimidmaterial bestehen. Die Fensterbereiche 28 können aus der Leiterbahnfolie 15 ausgestanzt sein oder, im Falle einer aus transparentem Material bestehenden Leiterbahnfolie, transparent gehalten sein.

Der Chip 14 und das Display 3 sind auf der Innenseite der Leiterbahnfolie 15 elektrisch über Kontakte 30 miteinander verbunden. Die Kontakte 30 können die einzige mechanische Verbindung des Displays zur Leiterbahnfolie bilden. Auch bei dieser Variante kann die Ansteuerelektronik entweder im Chip 14 oder als separater Ansteuerchip im Display 3 integriert sein. Die Rückseite des so vorbereiteten Leiterbahn-Halbzeugs wird anschließend mit einem Gußgehäuse 26 vergossen, wodurch sich eine kompakte Moduleinheit ergibt.

Zur Herstellung des Gußgehäuses 26 können die in der Chipmodultechnik bekannten Vergußvarianten eingesetzt werden, wie etwa die als "Mould-Technik" und "Glob-Top" bekannten Techniken.

Figur 14 zeigt eine vorteilhafte Weiterbildung einer Kombimodul-Chipkarte mit integrierter Flachbatterie 31. Die Flachbatterie 31 wird über einen Steckkontakt 32 an das Leiterbahninlett 19 des Kartenkörpers 5 kontaktiert. Über eine Haftschicht 33 läßt sich die Flachbatterie 31 an der Rückseite des Kombimoduls 27 fixieren. Dadurch ist es möglich, die Flachbatterie 31 in einfacher Weise von der dem Kombimodul 27 gegenüberliegenden Kartenseite aus auszuwechseln.

## Patentansprüche

1. Anordnung bestehend aus einem kombinierten Chip- und Displaymodul (27) und einem tragbaren Datenträger, wobei das kombinierte Chip- und Displaymodul (27) ein eine Leiterbahnfolie (15) mit Chipverguß (14, 16) umfassendes Chipmodul (2) für den Daten- und/oder Energietransfer zwischen dem kombinierten Chip- und Displaymodul (27) und einem externen Terminal und ein mit dem Chipmodul (2) elektronisch verbundenes Display (3) mit einer Anzeigefläche (29) zur Anzeige von Daten umfaßt, **dadurch gekennzeichnet, daß** das Display (3) und das Chipmodul (2) mittels einem Vergußmaterial (26) zu einem einheitlichen Kombimodul (27) vergossen sind, wobei das Vergußmaterial (26) elastischer ist als das Material des tragbaren Datenträgers.

2. Anordnung nach Anspruch 1, **dadurch gekennzeichnet, daß** das Display (3) und das Chipmodul (2) als separate, lediglich über elektrische Kontakte miteinander verbundene Bauelemente in dem Vergußmaterial (26) vergossen sind.

3. Anordnung nach Anspruch 1, **dadurch gekennzeichnet, daß** sich die Leiterbahnfolie (15) des Chipmoduls (2) über das Display (3) erstreckt und die Leiterbahnfolie (15) Fensterbereiche (28) aufweist, durch die hindurch Teilbereiche der Anzeigefläche (29) des Displays (3) sichtbar sind.

4. Anordnung nach Anspruch 3, **dadurch gekennzeichnet, daß** die Fensterbereiche (29) als Aussparungen der Leiterbahnfolie (15) ausgebildet sind.

5. Anordnung nach Anspruch 3, **dadurch gekennzeichnet, daß** die Fensterbereiche (28) durch transparente Bereiche der Leiterbahnfolie (15) gebildet sind.

6. Anordnung nach einem der Ansprüche 1 bis 5, **dadurch gekennzeichnet, daß** auf der der Anzeigefläche (29) des Displays (3) gegenüberliegenden Seite des Kombimoduls (27) eine Haftschicht (33) zum lösbaren Anheften einer Flachbatterie (31) vorgesehen ist.

7. Anordnung nach Anspruch 1, **dadurch gekennzeichnet, daß** der tragbare Datenträger (1) einen Kartenkörper (5) mit Längsseiten und mit Schmalseiten (6) sowie eine Kavität (4) zur Aufnahme eines Displays (3) und eines Chipmoduls (2) umfaßt, das Display (3) und das Chipmodul (2) als kombiniertes Chip- und Displaymodul (27) ausgeführt sind und das kombinierte Chip- und Displaymodul (27) außerhalb der Hauptbiegezone des Kartenkörpers (5) plaziert ist.

8. Anordnung nach Anspruch 7, **dadurch gekennzeichnet, daß** sich die Kavität (4) parallel zur Hauptbiegelinie (7) erstreckt und der Abstand der Kavität (4) zur Hauptbiegelinie (7) größer ist als der Abstand der Kavität (4) zur nächstliegenden Schmalseite (6).

9. Anordnung nach Anspruch 7, **dadurch gekennzeichnet, daß** das Display (3) und das Chipmodul (2) als separate, lediglich über elektrische Kontakte miteinander verbundene Bauelemente in dem Vergußmaterial (26) vergossen sind.

10. Anordnung nach Anspruch 7, **dadurch gekennzeichnet, daß** sich die Leiterbahnfolie (15) des Chipmoduls (2) über das Display (3) erstreckt und die Leiterbahnfolie (15) Fensterbereiche (28) aufweist, durch die hindurch Teilbereiche der Anzeigefläche (29) des Displays (3) sichtbar sind.

11. Anordnung nach Anspruch 10, **dadurch gekennzeichnet, daß** die Fensterbereiche (29) als Aussparungen der Leiterbahnfolie (15) ausgebildet sind.

12. Anordnung nach Anspruch 10, **dadurch gekennzeichnet, daß** die Fensterbereiche (28) durch transparente Bereiche der Leiterbahnfolie (15) gebildet sind.

13. Anordnung nach Anspruch 7, **dadurch gekennzeichnet, daß** auf der der Anzeigefläche (29) des Displays (3) gegenüberliegenden Seite des Kombimoduls (27) eine Flachbatterie (31) angeordnet ist.

14. Anordnung nach Anspruch 13, **dadurch gekennzeichnet, daß** die Flachbatterie (31) von der dem Kombimodul (27) gegenüberliegenden Seite des Kartenkörpers (5) aus der Chipkarte (1) entnehmbar ist.

15. Verfahren zum Herstellen eines kombinierten Chip- und Displaymoduls für eine Anordnung gemäß Anspruch 1, mit den Schritten:
- Zurverfügungstellen eines eine Leiterbahnfolie (15) mit Chipverguß (14, 16) umfassenden Chipmoduls (2) für den Daten- und/oder Energietransfer zwischen dem Chipmodul (2) und einem externen Terminal,
- Zurverfügungstellen eines Displays (3) mit einer Anzeigefläche (29) zur Anzeige von Daten,
- Kontaktieren des Displays (3) und Chipmoduls (2), **gekennzeichnet durch** folgenden weiteren Schritt.
- Umgießen des kontaktierten Displays und Chipmoduls (2, 3) mit Vergußmaterial (26) zu einem einheitlichen Kombimodul (27), wobei das entstehende Vergußgehäuse (26) elastischer ist als das Material des tragbaren Datenträgers (5).

16. Verfahren nach Anspruch 15, **dadurch gekennzeichnet, daß** das Display (3) und das Chipmodul (2) als separate, lediglich über elektrische Kontakte miteinander verbundene Bauelemente in dem Vergußmaterial (26) vergossen werden.

17. Verfahren nach Anspruch 15, **dadurch gekennzeichnet, daß** das Display (3) zusammen mit dem Chipverguß (26) auf der Leiterbahnfolie (15) des Chipmoduls (2) angeordnet wird und die Leiterbahnfolie (15) Fensterbereiche (28) aufweist, durch die hindurch Teilbereiche der Anzeigefläche (29) des Displays (3) sichtbar sind.

18. Verfahren nach Anspruch 17, **dadurch gekennzeichnet, daß** die Fensterbereiche (29) durch Aussparungen in der Leiterbahnfolie (15) erzeugt werden.

19. Verfahren nach Anspruch 17, **dadurch gekennzeichnet, daß** die Fensterbereiche (28) als transparente Bereiche der Leiterbahnfolie (15) ausgebildet werden.

20. Verfahren nach einem der Ansprüche 15 bis 19, **dadurch gekennzeichnet, daß** auf der der Anzeigefläche (29) des Displays (3) gegenüberliegenden Seite des Kombimoduls (27) eine Haftschicht (33) zum lösbaren Anheften einer Flachbatterie (31) vorgesehen wird.

21. Verfahren zur Herstellung einer Anordnung gemäß Anspruch 1, wobei ein Kartenkörper (5) mit einer Kavität (4), zur Verfügung gestellt wird, **gekennzeichnet durch** die Schritte:
- Herstellen eines kombinierten Chip- und Displaymoduls (27) gemäß Anspruch 15,
- Einsetzen, Kontaktieren und Verkleben und/oder Vergießen des Kombimoduls in der Kavität (4).

22. Verfahren nach Anspruch 21, **dadurch gekennzeichnet, daß** die Kavität (4) von der Hauptbiegelinie (7), welche mittig zwischen zwei einander gegenüberliegenden Schmalseiten (6) des Kartenkörpers (5) verläuft, entfernt angeordnet wird.

23. Verfahren nach Anspruch 22, **dadurch gekennzeichnet, daß** die Kavität (4) parallel zur Hauptbiegelinie (7) ausgerichtet und der Abstand der Kavität (4) zur Hauptbiegelinie (7) größer als der Abstand der Kavität (4) zur nächstliegenden Schmalseite (6) gewählt wird.

## Claims

1. An assembly consisting of a combined chip and display module (27) and a portable data carrier, the combined chip and display module (27) comprising a chip module (2) comprising a flexible printed circuit board (15) with a potted chip (14, 16) for data and/or energy transfer between the combined chip and display module (27) and an external terminal, and a display (3) electronically connected to the chip module (2) and having a display area (29) for displaying data, **characterized in that** the display (3) and the chip module (2) are potted by means of a potting material (26) to form a uniform combined module (27), the potting material (26) being more elastic than the material of the portable data carrier.

2. The assembly according to claim 1, **characterized in that** the display (3) and the chip module (2) are potted in the potting material (26) as separate components interconnected only via electrical contacts.

3. The assembly according to claim 1, **characterized in that** the flexible printed circuit board (15) of the chip module (2) extends over the display (3), and the flexible printed circuit board (15) has window areas (28) through which partial areas of the display area (29) of the display (3) are visible.

4. The assembly according to claim 3, **characterized in that** the window areas (29) are configured as gaps in the flexible printed circuit board (15).

5. The assembly according to claim 3, **characterized in that** the window areas (28) are constituted by transparent areas of the flexible printed circuit board (15).

6. The assembly according to any of claims 1 to 5, **characterized in that** an adhesive layer (33) for detachably fastening a flat battery (31) is provided on the side of the combined module (27) opposite the display area (29) of the display (3).

7. The assembly according to claim 1, **characterized in that** the portable data carrier (1) comprises a card body (5) with longitudinal sides and with narrow sides (6) as well as a cavity (4) for receiving a display (3) and a chip module (2), the display (3) and the chip module (2) are executed as a combined chip and display module (27), and the combined chip and display module (27) is placed outside the main bending zone of the card body (5).

8. The assembly according to claim 7, **characterized in that** the cavity (4) extends parallel to the main bending line (7), and the distance between the cavity (4) and the main bending line (7) is greater than the distance between the cavity (4) and the closest narrow side (6).

9. The assembly according to claim 7, **characterized in that** the display (3) and the chip module (2) are potted in the potting material (26) as separate components interconnected only via electrical contacts.

10. The assembly according to claim 7, **characterized in that** the flexible printed circuit board (15) of the chip module (2) extends over the display (3), and the flexible printed circuit board (15) has window areas (28) through which partial areas of the display area (29) of the display (3) are visible.

11. The assembly according to claim 10, **characterized in that** the window areas (29) are configured as gaps in the flexible printed circuit board (15).

12. The assembly according to claim 10, **characterized in that** the window areas (28) are constituted by transparent areas of the flexible printed circuit board (15).

13. The assembly according to claim 7, **characterized in that** a flat battery (31) is disposed on the side of the combined module (27) opposite the display area (29) of the display (3).

14. The assembly according to claim 13, **characterized in that** the flat battery (31) is removable from the chip card (1) from the side of the card body (5) opposite the combined module (27).

15. A method for producing a combined chip and display module for an assembly according to claim 1, having the steps of:
- providing a chip module (2) comprising a flexible printed circuit board (15) with chip potting (14, 16) for data and/or energy transfer between the chip module (2) and an external terminal,
- providing a display (3) with a display area (29) for displaying data,
- contacting the display (3) and chip module (2), **characterized by** the following further step,
- potting the contacted display and chip module (2, 3) with potting material (26) to form a uniform combined module (27), the resulting pot casing (26) being more elastic than the material of the portable data carrier (5).

16. The method according to claim 15, **characterized in that** the display (3) and the chip module (2) are potted in the potting material (26) as separate components interconnected only via electrical contacts.

17. The method according to claim 15, **characterized in that** the display (3) is disposed together with the potted chip (26) on the flexible printed circuit board (15) of the chip module (2), and the flexible printed circuit board (15) has window areas (28) through which partial areas of the display area (29) of the display (3) are visible.

18. The method according to claim 17, **characterized in that t**he window areas (29) are produced by gaps in the flexible printed circuit board (15).

19. The method according to claim 17, **characterized in that** the window areas (28) are configured as transparent areas of the flexible printed circuit board (15).

20. The method according to any of claims 15 to 19, **characterized in that** an adhesive layer (33) for detachably fastening a flat battery (31) is provided on the side of the combined module (27) opposite the display area (29) of the display (3).

21. A method for producing an assembly according to claim 1, whereby a card body (5) with a cavity (4) is provided, **characterized by** the steps of:
- producing a combined chip and display module (27) according to claim 15,
- inserting, contacting and bonding and/or potting the combined module in the cavity (4).

22. The method according to claim 21, **characterized in that** the cavity (4) is disposed remote from the main bending line (7) which extends in the middle between two mutually opposite narrow sides (6) of the card body (5).

23. The method according to claim 22, **characterized in that** the cavity (4) is aligned parallel to the main bending line (7), and the distance between the cavity (4) and the main bending line (7) is selected to be greater than the distance between the cavity (4) and the closest narrow side (6).

## Revendications

1. Disposition consistant d'une part en un module (27) combinant un module puce avec un module d'affichage et d'autre part en un support de données portable, le module (27) combinant un module puce avec un module d'affichage comprenant un module puce (2) qui comporte un film conducteur (15) avec scellement de puce (14, 16) pour le transfert de données et/ou d'énergie entre le module (27) combinant un module puce avec un module d'affichage et un terminal externe, et comprenant aussi une unité d'affichage (3) qui est reliée électroniquement au module puce (2) et qui est pourvue d'une surface (29) pour l'affichage de données, disposition **caractérisée en ce que** l'unité d'affichage (3) et le module puce (2) sont scellés au moyen d'un matériau de scellement (26) de manière à constituer un module combiné unitaire (27), le matériau de scellement (26) étant plus élastique que le matériau du support de données portable.

2. Disposition selon la revendication 1, **caractérisée en ce que** l'unité d'affichage (3) et le module puce (2) sont scellés dans le matériau de scellement (26) en tant que composants séparés et uniquement reliés entre eux par des contacts électriques.

3. Disposition selon la revendication 1, **caractérisée en ce que** le film conducteur (15) du module puce (2) s'étend par-dessus l'unité d'affichage (3) et **en ce que** le film conducteur (15) comporte des zones de fenêtre (28) à travers lesquelles des zones partielles de la surface d'affichage (29) de l'unité d'affichage (3) sont visibles.

4. Disposition selon la revendication 3, **caractérisée en ce que** les zones de fenêtre (28) sont réalisées sous forme d'évidements du film conducteur (15).

5. Disposition selon la revendication 3, **caractérisée en ce que** les zones de fenêtre (28) sont constituées par des zones transparentes du film conducteur (15).

6. Disposition selon une des revendications de 1 à 5, **caractérisée en ce qu'**une couche adhésive (33) est prévue sur le côté du module combiné (27) opposé par rapport à la surface d'affichage (29) de l'unité d'affichage (3), cette couche adhésive étant destinée à une fixation amovible d'une pile plate (31).

7. Disposition selon la revendication 1, **caractérisée en ce que** le support (1) de données portable comprend un corps de carte (5) comportant des côtés longitudinaux et des côtés étroits (6) ainsi qu'une cavité (4) destinée à recevoir une unité d'affichage (3) et un module puce (2), **en ce que** l'unité d'affichage (3) et le module puce (2) sont réalisés sous forme de module (27) combinant un module puce avec un module d'affichage, et **en ce que** le module (27) consistant à la fois en un module puce et en un module d'affichage est placé à l'extérieur de la zone de flexion principale du corps de carte (5).

8. Disposition selon la revendication 7, **caractérisée en ce que** la cavité (4) s'étend parallèlement à la ligne de flexion principale (7) et **en ce que** la distance entre la cavité (4) et la ligne de flexion principale (7) est plus grande que la distance entre la cavité (4) et le côté étroit (6) le plus proche.

9. Disposition selon la revendication 7, **caractérisée en ce que** l'unité d'affichage (3) et le module puce (2) sont scellés dans le matériau de scellement (26) en tant que composants séparés et uniquement reliés entre eux par des contacts électriques.

10. Disposition selon la revendication 7, **caractérisée en ce que** le film conducteur (15) du module puce (2) s'étend par-dessus l'unité d'affichage (3) et **en ce que** le film conducteur (15) comporte des zones de fenêtre (28) à travers lesquelles des zones partielles de la surface d'affichage (29) de l'unité d'affichage (3) sont visibles.

11. Disposition selon la revendication 10, **caractérisée en ce que** les zones de fenêtre (28) sont réalisées sous forme d'évidements du film conducteur (15).

12. Disposition selon la revendication 10, **caractérisée en ce que** les zones de fenêtre (28) sont constituées par des zones transparentes du film conducteur (15).

13. Disposition selon la revendication 7, **caractérisée en ce qu'**une pile plate (31) est disposée sur le côté du module combiné (27) opposé par rapport à la surface d'affichage (29) de l'unité d'affichage (3).

14. Disposition selon la revendication 13, **caractérisée en ce que** la pile plate (31) peut être retirée de la carte à puce (1) à partir du côté du corps de carte (5) opposé par rapport au module combiné (27).

15. Procédé servant à la production d'un module combinant un module puce avec un module d'affichage pour une disposition selon la revendication 1, comprenant les étapes:
- mise à disposition d'un module puce (2) comportant un film conducteur (15) avec scellement de puce (14, 16) pour le transfert de données et/ou d'énergie entre le module puce (2) et un terminal externe,
- mise à disposition d'une unité d'affichage (3) pourvue d'une surface d'affichage (29) pour l'affichage de données,
- mise en contact de l'unité d'affichage (3) et du module puce (2), **caractérisée par** l'étape supplémentaire suivante.
- remoulage de l'unité d'affichage et du module puce (2, 3) mis en contact, ce remoulage ayant lieu au moyen de matériau de scellement (26) de manière à obtenir un module combiné unitaire (27), le boîtier moulé ainsi obtenu (26) étant plus élastique que le matériau du support de données (5) portable.

16. Procédé selon la revendication 15, **caractérisé en ce que** l'unité d'affichage (3) et le module puce (2) sont scellés dans le matériau de scellement (26) en tant que composants séparés et uniquement reliés entre eux par des contacts électriques.

17. Procédé selon la revendication 15, **caractérisé en ce que** l'unité d'affichage (3) est disposée avec le scellement (26) de puce sur le film conducteur (15) du module puce (2) et **en ce que** le film conducteur (15) comporte des zones de fenêtre (28) à travers lesquelles des zones partielles de la surface d'affichage (29) de l'unité d'affichage (3) sont visibles.

18. Procédé selon la revendication 17, **caractérisé en ce que** les zones de fenêtre (28) sont fabriquées sous forme d'évidements pratiqués dans le film conducteur (15).

19. Procédé selon la revendication 17, **caractérisé en ce que** les zones de fenêtre (28) sont constituées par des zones transparentes du film conducteur (15).

20. Procédé selon une des revendications de 15 à 19, **caractérisé en ce qu'**une couche adhésive (33) est prévue sur le côté du module combiné (27) opposé par rapport à la surface d'affichage (29) de l'unité d'affichage (3), cette couche adhésive étant destinée à une fixation amovible d'une pile plate (31).

21. Procédé de production d'une disposition selon la revendication 1, un corps de carte (5) pourvu d'une cavité (4) étant mis à disposition, ce procédé étant **caractérisé par** les étapes:
- production d'un module combinant un module puce avec un module d'affichage selon la revendication 15,
- mise en place, mise en contact et collage et/ou scellement du module combiné dans la cavité (4).

22. Procédé selon la revendication 21, **caractérisé en ce que** la cavité (4) est disposée de manière éloignée de la ligne de flexion principale (7), laquelle passe centralement entre deux côtés étroits (6) du corps de carte (5) qui se font face.

23. Procédé selon la revendication 22, **caractérisé en ce que** la cavité (4) est orientée parallèlement à la ligne de flexion principale (7), et **en ce que** la distance entre la cavité (4) et la ligne de flexion principale (7) est plus grande que la distance entre la cavité (4) et le côté étroit (6) le plus proche.
